# FASCICULE DE BREVET EUROPEEN

(11) **EP 2 643 823 B1**
(45) Date de publication et mention de la délivrance du brevet: **29.06.2016**
(21) Numéro de dépôt: 10805273.9
(22) Date de dépôt: 25.11.2010
(51) Int. Cl.: G07D 7/00, G07D 7/20, B42D 25/29

(54) **DOCUMENT, PROCÉDÉ ET DISPOSITIF DE FABRICATION DE DOCUMENT ET PROCÉDÉ ET DISPOSITIF D'IDENTIFICATION DE DOCUMENT**
DOKUMENT, VERFAHREN UND VORRICHTUNG ZUR HERSTELLUNG EINES DOKUMENTS UND VERFAHREN UND VORRICHTUNG ZUR IDENTIFIZIERUNG EINES DOKUMENTS
DOCUMENT, METHOD AND DEVICE FOR PRODUCING A DOCUMENT AND METHOD AND DEVICE FOR IDENTIFYING A DOCUMENT

(43) Date de publication de la demande: 02.10.2013
(73) Titulaire: Advanced Track & Trace, 92500 Rueil-Malmaison (FR)
(72) Inventeur: MASSICOT, Jean Pierre, 92500 Rueil-Malmaison (FR); FOUCOU, Alain, 92500 Rueil-Malmaison (FR); SAGAN, Zbigniew, 92500 Rueil Malmaison (FR)
(74) Mandataire: Cornuejols, Georges
(86) Numéro de dépôt international: PCT/FR2010/052527
(87) Numéro de publication internationale: WO 2011/064504

(56) Documents cités:
- AU-A1- 2007 254 655
- FR-A1- 2 796 922
- US-A1- 2006 131 425

## Description

La présente invention concerne un document, un procédé et un dispositif de fabrication de document et un procédé et un dispositif d'identification de document. Elle s'applique, en particulier, à l'authentification d'un document papier.

Il est connu de nombreux moyens pour authentifier un document, en lui donnant, lors de la fabrication d'une feuille des caractéristiques reconnaissables. Par exemple, un filigrane permet de modifier la transparence locale d'un document. De même, l'insertion de matériaux dans le papier, tels que des fibres ou des bandes devraient permettre de rendre les documents formés avec ce papier infalsifiables.

Cependant, ces techniques sont très onéreuses et reproduites, plus ou moins fidèlement, par des contrefacteurs.

Il existe des techniques pour mémoriser des caractéristiques physiques d'un document, par exemple la forme de fibres dans une partie donnée du document. Cependant, la reconnaissance du document sur la base d'une nouvelle analyse est très sensible aux variations d'angle d'analyse, notamment de capteur d'image et ne peuvent, finalement, être utilisées qu'en laboratoire.

La demande de brevet australien numéro AU 2007 254 655 divulgue un procédé, un dispositif et un programme d'ordinateur pour l'authentification d'un support au moins partiellement transparent comportant deux faces. Chaque face comporte une signature générée à partir de propriétés optiques de la face et les signatures sont enregistrées dans une base de données pour identifier un document originale.

La demande de brevet français numéro FR 2 796 922 divulgue un élément d'emballage en matière plastique comportant une paroi transparente. Sur une face de l'emballage, un marquage est imprimé avec une encre sympathique. Le marquage est imprimé sur une trame dispersante primaire. Une trame dispersante en surimpression recouvre le marquage et une zone qui entoure ledit marquage pour rendre ce dernier indécelable.

La demande de brevet américaine numéro US 2006/131425 divulgue un document de valeur comportant une marque d'authentification lisible à la machine. LA marque comprend une substance de marquage luminescente et une substance de marquage absorbant une partie du spectre infrarouge.

La présente invention vise à remédier à ces inconvénients.

A cet effet, selon un premier aspect, la présente invention vise un document plan caractérisé en ce qu'il comporte :
- sur une première face du document, au moins une marque imprimée,
- sur une deuxième face du document opposée à ladite première face, au moins une marque imprimée invisible superposée à une marque imprimée sur ladite première face,
- dans au moins un couple de marques superposées formées sur lesdites faces opposées, au moins l'une des marques dudit couple a un contenu unique.

Grâce à ces dispositions, le document est triplement protégé. D'une part, la détermination de la présence d'une marque invisible fournit un premier niveau de protection. D'autre part, la précision de la superposition des marques donne un deuxième niveau de protection car il est très difficile de superposer l'impression de deux marques avec précision sur deux faces opposées d'un document. De plus, le contenu unique d'au moins une marque portée par le document permet d'identifier le document de manière univoque.

Selon des caractéristiques particulières, dans au moins un couple de marques superposées, chaque marque imprimée est invisible.

La détection de la protection du document est ainsi encore plus difficile.

Selon des caractéristiques particulières, chacune de marques d'au moins un couple de marques superposées a un contenu unique.

L'identification du document est ainsi plus forte.

Selon des caractéristiques particulières, au moins une dite marque invisible est un code à barres en deux dimensions. Grâce à ces dispositions, une fois une image de la marque prise, on peut utiliser des systèmes de traitement standards.

Selon des caractéristiques particulières, au moins une dite marque invisible est une marque anti-copie. Grâce à ces dispositions, on peut déterminer si le document est un original ou une copie.

Selon des caractéristiques particulières, au moins une marque invisible est constituée d'un verni. Grâce à ces dispositions, la marque est particulièrement durable.

Selon des caractéristiques particulières, le contenu d'au moins une marque est représentatif de la position d'une marque invisible sur le document. Ainsi, pour retrouver une marque invisible, on utilise le contenu d'une autre marque, par exemple visible.

Selon un deuxième aspect, la présente invention vise un procédé de fabrication d'un document plan, caractérisé en ce qu'il comporte :
- une étape de génération d'une marque ayant un contenu unique,
- une étape d'impression, sur une première face du document, d'au moins une marque imprimée et
- une étape d'impression, sur une deuxième face du document opposée à ladite première face, d'au moins une marque imprimée invisible superposée à une marque imprimée sur ladite première face,
dans au moins une étape d'impression, pour au moins couple de marques superposées formées sur lesdites faces opposées, au moins l'une des marques étant une marque générée ayant un contenu unique.

Selon un troisième aspect, la présente invention vise un procédé d'identification d'un document, caractérisé en ce qu'il comporte :
- une étape de capture d'une image d'une première marque sur une première face du document,
- une étape de capture d'une image d'une deuxième marque sur une deuxième face du document, superposée à la première marque,
- une étape de lecture du contenu d'une des première et deuxième marque et
- une étape d'identification du document en fonction dudit contenu.

Selon des caractéristiques particulières, au moins une des étapes de capture d'une image comporte une étape de dépôt de matière visible sur la marque dont une image est capturée.

Selon un quatrième aspect, la présente invention vise un dispositif de fabrication d'un document plan, caractérisé en ce qu'il comporte :
- un moyen de génération d'une marque ayant un contenu unique,
- un moyen d'impression, sur une première face du document, d'au moins une marque imprimée et
- un moyen d'impression, sur une deuxième face du document opposée à ladite première face, d'au moins une marque imprimée invisible superposée à une marque imprimée sur ladite première face,
au moins un des moyens d'impression étant adapté, pour au moins couple de marques superposées formées sur lesdites faces opposées, à ce qu'au moins l'une des marques soit une marque générée ayant un contenu unique.

Selon un cinquième aspect, la présente invention vise un dispositif d'identification d'un document, caractérisé en ce qu'il comporte :
- un moyen de capture d'une image d'une première marque sur une première face du document,
- un moyen de capture d'une image d'une deuxième marque sur une deuxième face du document, superposée à la première marque,
- un moyen de lecture du contenu d'une des première et deuxième marque et
- un moyen d'identification du document en fonction dudit contenu.

Les avantages, buts et caractéristiques particulières de ce procédé de fabrication, de ce procédé d'identification, de ce dispositif de fabrication et de ce dispositif d'identification étant identiques à ceux du document objet de la présente invention, tel que succinctement exposés ci-dessus, ils ne sont pas rappelés ici.

D'autres avantages, buts et caractéristiques particulières de la présente invention ressortiront de la description qui va suivre faite, dans un but explicatif et nullement limitatif en regard des dessins annexés, dans lesquels :
- la figure 1 représente, schématiquement, une première face d'un mode de réalisation particulier d'un document objet de la présente invention,
- la figure 2 représente, schématiquement, une deuxième face du document illustré en figure 1,
- la figure 3 représente, sous forme de logigramme, des étapes mises en oeuvre dans un mode de réalisation particulier du procédé de fabrication objet de la présente invention,
- la figure 4 représente, sous forme de logigramme, des étapes mises en oeuvre dans un mode de réalisation particulier du procédé d'identification objet de la présente invention,
- la figure 5 représente, schématiquement, un mode de réalisation particulier du dispositif de fabrication objet de la présente invention et
- la figure 6 représente, schématiquement, un mode de réalisation particulier du dispositif d'identification objet de la présente invention.

On note que les figures ne sont pas à l'échelle.

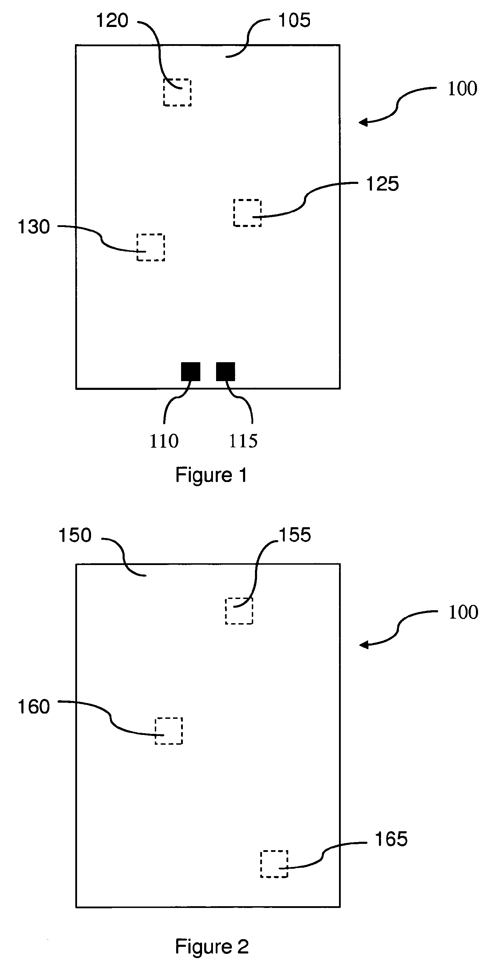

On observe, en figures 1 et 2, un document plan 100 qui comporte :
- sur une première face 105, illustrée en figure 1, cinq marques imprimées 110, 115, 120, 125 et 130 et
- sur une deuxième face 150, illustrée en figure 2, trois marques imprimées 155, 160 et 165.

Le document 100 est un document plan. Il est, par exemple, constitué en papier, papier plastifié, tissu ou matière plastique. Dans le cas représenté, le document 100 est une feuille d'un format standard. Les faces 105 et 150 sont donc coplanaires.

La marque imprimée 110 est une marque visible positionnée en bas de page. Le contenu de la marque 110 est variable d'un document à un autre et, préférentiellement unique pour le document considéré. Dans le mode de réalisation décrit, la marque 110 est un code à barres à deux dimensions, aussi appelé « Datamatrix ». La marque imprimée 115 est une marque visible placée à côté de la marque 110. Le contenu de la marque 115 est variable d'un document à un autre et, préférentiellement unique pour le document considéré. Dans le mode de réalisation décrit, la marque 115 est une marque anti-copie, c'est-à-dire que ses caractéristiques se dégradent de manière mesurable lors d'une copie du document 100.

Par exemple, une marque anti-copie comporte un fort taux de redondances et est imprimé avec une résolution, liée à la qualité d'impression, telle que, dès l'impression, par suite de phénomènes physiques ponctuellement aléatoires, le taux de redondance à mettre en oeuvre pour corriger et lire le contenu de la marque anti-copie est élevée, préférentiellement supérieur à 10 pour cent. Ainsi, une copie de la marque anti-copie faite avec des moyens d'impression de qualité similaire à ceux utilisés pour l'impression initiale provoque un accroissement de la quantité de redondances à mettre en oeuvre pour corriger et lire le contenu de la marque anti-copie qui peut être détecter pour reconnaître un original d'une copie.

Le lecteur pourra se référer au document WO 2009 004172 (PCT FR2008/00743) pour la détermination et la fabrication de la marque 115.

Le contenu des marques 110 et 115 est corrélé, c'est-à-dire que le contenu de l'une des marques 110 ou 115 est fonction du contenu de l'autre marque.

Les marques imprimées 120, 125 et 130 sont des marques invisibles. Elles sont constituées, par exemple, de vernis ou une encre invisible dopée, à base aqueuse. La marque 120 possède un contenu fixe, c'est-à-dire commun à un ensemble de documents. Les marques 125 et 130 possèdent un contenu unique, c'est-à-dire que seul le document 100 les porte.

Les marques imprimées 155, 160 et 165 sont des marques invisibles. Elles sont constituées, par exemple, de vernis. La marque 155 est superposée à la marque 120, c'est-à-dire qu'elle possède les mêmes dimensions que la marque 120 et que son contour est superposé au contour de la marque 120. Les marques 120 et 155 ont donc des formes symétriques par rapport à un axe du plan du document. La marque 160 est superposée à la marque 125. Enfin, la marque 165 n'est superposée à aucune marque de la première face 105. Le contenu des marques 155 et 160 est unique.

Ainsi, dans au moins un couple de marques superposées 120-155 ou 125-160, au moins l'une des marques du couple a un contenu unique.

Selon les variantes, le document objet de la présente invention, ne comporte aucune marque visible.

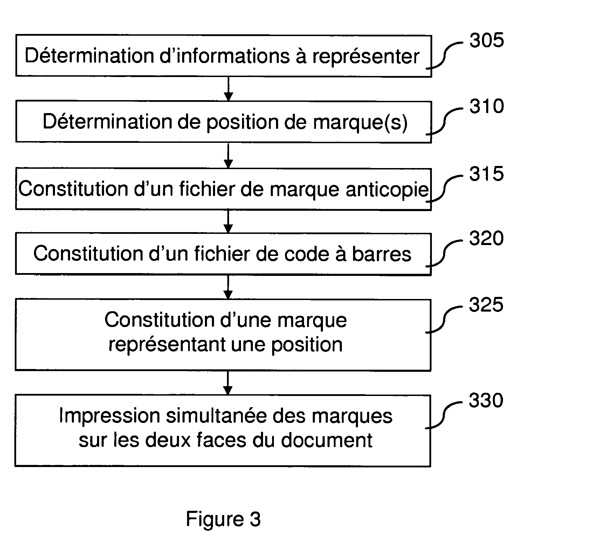

On observe, en figure 3, que pour fabriquer un document objet de la présente invention, on effectue, d'abord, une étape 305 de détermination d'informations à faire porter par le contenu des marques à imprimer.

Par exemple, ces informations comportent :
- un ordre de fabrication,
- un identifiant d'unité de fabrication,
- une date de fabrication,
- un type de fabrication,
- un numéro de série unique et/ou
- un donneur d'ordre de fabrication.

Au cours d'une étape 310, on détermine une position d'impression d'au moins un couple de marques superposées. Par exemple, cette position est déterminée aléatoirement.

Puis, au cours d'une étape 315, on constitue une marque de type anti-copie représentative d'au moins une partie des informations obtenues au cours de l'étape 305.

Au cours d'une étape 320, on constitue une marque de type code à barres en deux dimensions représentative d'au moins une partie des informations obtenues au cours de l'étape 305.

Au cours d'une étape 325, on constitue une marque représentative de la position de chaque couple de marques superposées.

Préférentiellement, au cours des étapes 315, 320 et 325, on insère dans les contenus des marques des codes de correction d'erreur (ou FEC pour « forward error correction »). La proportion de redondances FEC est plus élevée pour les marques anti-copie que pour les codes à barres en deux dimensions.

On observe que les marques issues des étapes 315, 320 et 325 sont des fichiers de points, par exemple binaires, représentant les valeurs d'impression à réaliser. Par exemple, dans le cas de marques binaires, pour chaque point à imprimer, une valeur représente l'impression et une autre valeur représente l'absence d'impression.

Au cours d'une étape 330, on imprime simultanément les deux faces d'un document pour y former l'ensemble des marques visibles ou invisibles, superposées ou non décrites en regard de la figure 1. Préférentiellement, la marque représentative de la position des autres marques est imprimer de manière visible et en une position fixe sur les différents documents.

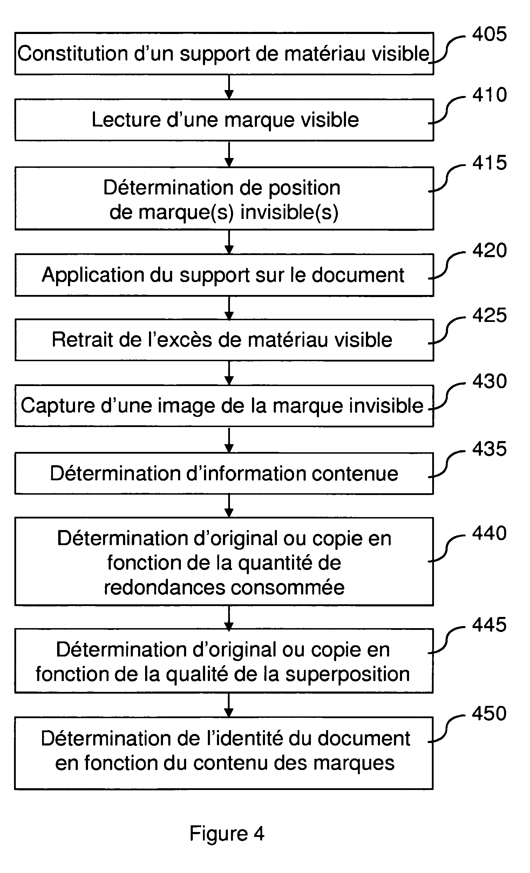

On observe, en figure 4, que, pour identifier un document, c'est-à-dire le reconnaître de façon unique, dans un mode de réalisation du procédé d'identification objet de la présente invention, on effectue, d'abord, une étape 405 de constitution d'un support de matériau visible uniforme. Par exemple, on dépose du noir de carbone sur une feuille.

Puis, au cours d'une étape 410, on lit une marque visible sur le document.

Au cours d'une étape 415, on détermine la position de chaque marque invisible en fonction du contenu de la marque visible.

Au cours d'une étape 420, on applique le matériau visible sur le document, aux endroits où se trouvent les marques invisibles.

Au cours d'une étape 425, on retire l'excès de matériau visible des endroits où se trouve les marques invisibles, par exemple en appliquant et en retirant un adhésif à ces endroits.

Au cours d'une étape 430, on capture une image de la marque invisible rendue visible par le reste du dépôt de matériau visible, au cours des étapes 420 et 425.

On note que cette capture d'image peut se faire sur le document ou sur un adhésif ayant retiré un excès de matériau visible.

Les étapes 415 à 430 sont réitérées pour les maques invisibles portées sur les deux faces 105 et 150 du document 100.

En variante, on élimine les étapes 420 et 425 et, au cours de l'étape 430, on utilise une lumière de longueur d'onde non visible et un capteur capable de capter la lumière émise, reflétée ou filtrée par chaque maque invisible pour prendre une image de chaque marque invisible.

Au cours d'une étape 435, on détermine l'information contenue dans les marques visibles. Préférentiellement, on met en oeuvre les codes de correction d'erreur pour corriger les erreurs représentées par les images captées et on mesure la quantité de redondances FEC utilisée pour corriger les erreurs des marques anti-copie.

Au cours d'une étape 440, on détermine, en fonction de la quantité de redondance utilisée pour corriger les marques anti-copie, si le document est un original ou une copie.

Au cours d'une étape 445, on mesure la précision de superposition des marques invisibles superposées et, en fonction d'une valeur limite (par exemple une distance), on détermine si le document est un original ou une copie. A cet effet, on traite les images pour déterminer la position du centre de chaque marque invisible, dans chacune des faces du document et on détermine la distance entre les centres de deux marques invisibles superposées.

Au cours d'une étape 450, on détermine une identité du document, en fonction du contenu des marques portées par le document et, en particulier, en fonction du contenu des marques invisibles.

On note que les étapes 435 et 445 peuvent être effectuées localement ou à distance, par exemple par un serveur.

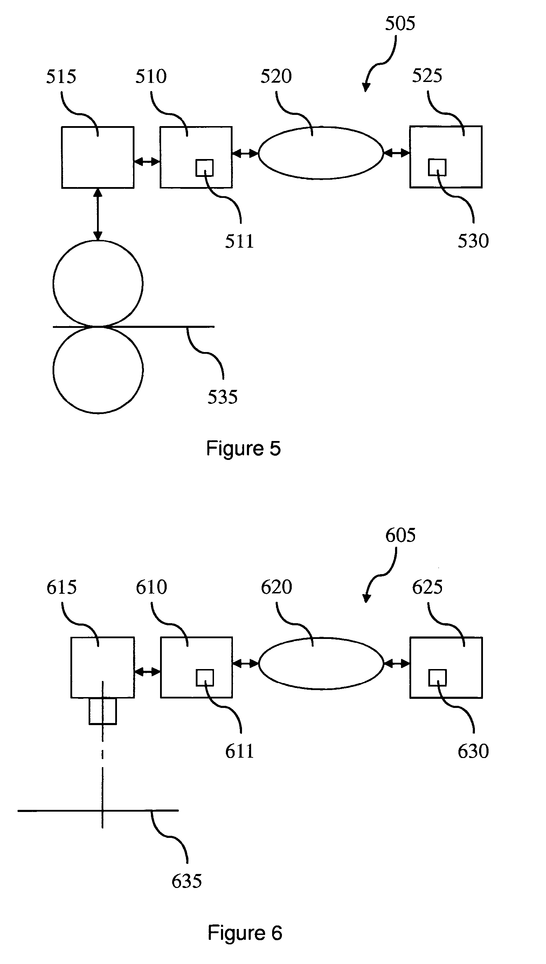

On observe, en figure 5, un dispositif de fabrication 505 comportant :
- une unité centrale 510 munie de mémoires 511,
- une imprimante 515 et
- une connexion à un réseau informatique 520, pour communiquer avec un serveur distant 525.

L'unité centrale 510 est adaptée, en exécutant les instructions d'un programme d'ordinateur conservé dans ses mémoires 511, en combinaison avec le serveur 525, à implémenter les étapes illustrées en figure 3 et à commander l'imprimante 515. Le serveur 525 conserve une base de données 530 dans laquelle un identifiant de chaque document est conservé avec les informations associées, comme décrit en regard de l'étape 305.

Le réseau informatique 520 est, par exemple, le réseau internet.

L'imprimante 515 est adaptée à imprimer simultanément des marques sur les deux faces du document 535. En variante, l'impression des marques sur les deux faces est effectuée successivement.

On observe, en figure 6, un dispositif d'identification 605 comportant :
- une unité centrale 610 munie de mémoires 611,
- un moyen de capture d'image 615 et
- une connexion à un réseau informatique 620, pour communiquer avec un serveur distant 625.

L'unité centrale 610 est adaptée, en exécutant les instructions d'un programme d'ordinateur conservé dans ses mémoires 611, en combinaison avec le serveur 625, à implémenter les étapes illustrées en figure 4 et à commander la capture d'image par les moyens de capture d'image 615. Le serveur 625 conserve une base de données 630 dans laquelle un identifiant de chaque document est conservé avec les informations associées, comme décrit en regard de l'étape 305.

Le réseau informatique 620 est, par exemple, le réseau internet. Les moyens de capture d'image 615 sont, par exemple constitué d'une source de lumière visible ou invisible et d'un capteur d'image adapté à fournir une image représentative d'une marque, visible ou invisible portée par un document 635.

La présente invention trouve particulièrement des applications dans la fabrication de papier majoritairement ou intégralement uniforme sur lesquels on peut écrire ou imprimer de l'information, afin de certifier, à posteriori que le document ainsi constitué est un original.

## Revendications

1. Document plan (100) **caractérisé en ce qu'**il comporte :
- sur une première face (105) du document, au moins une marque imprimée (110, 115, 120, 125, 130),
- sur une deuxième face (150) du document opposée à ladite première face, au moins une marque imprimée invisible (155, 160) superposée à une marque imprimée sur ladite première face, superposée signifiant qu'elle possède les mêmes dimensions que la marque imprimée sur la première face et que son contour est superposé au contour de la marque imprimée sur la première face, les marques superposées ayant donc des formes symétriques par rapport à un axe du plan du document, la précision de superposition des marques invisibles superposées étant mesurable en fonction d'une valeur limite,
- dans au moins un couple de marques superposées (120-155, 125-160) formées sur lesdites faces opposées, au moins l'une des marques dudit couple a un contenu unique.

2. Document selon la revendication 1, **caractérisé en ce que**, dans au moins un couple de marques superposées (120-155, 125-160), chaque marque imprimée est invisible.

3. Document selon l'une quelconque des revendications 1 ou 2, **caractérisé en ce que** chacune de marques d'au moins un couple de marques superposées a un contenu unique.

4. Document selon l'une quelconque des revendications 1 à 3, **caractérisé en ce qu'**au moins une dite marque invisible est un code à barres en deux dimensions.

5. Document selon l'une quelconque des revendications 1 à 4, **caractérisé en ce qu'**au moins une dite marque invisible est une marque anti-copie.

6. Document selon l'une quelconque des revendications 1 à 5, **caractérisé en ce qu'**au moins une marque invisible est constituée d'un verni.

7. Document selon l'une quelconque des revendications 1 à 6, **caractérisé en ce que** le contenu d'au moins une marque (110) est représentative de la position d'une marque invisible sur le document.

8. Procédé de fabrication d'un document plan, **caractérisé en ce qu'**il comporte :
- une étape (305, 310, 315) de génération d'une marque ayant un contenu unique,
- une étape (330) d'impression, sur une première face du document, d'au moins une marque imprimée et
- une étape (330) d'impression, sur une deuxième face du document opposée à ladite première face, d'au moins une marque imprimée invisible superposée à une marque imprimée sur ladite première face, superposée signifiant qu'elle possède les mêmes dimensions que la marque imprimée sur la première face et que son contour est superposé au contour de la marque imprimée sur la première face, les marques superposées ayant donc des formes symétriques par rapport à un axe du plan du document, la précision de superposition des marques invisibles superposées étant mesurable en fonction d'une valeur limite,
dans au moins une étape d'impression, pour au moins couple de marques superposées formées sur lesdites faces opposées, au moins l'une des marques étant une marque générée ayant un contenu unique.

9. Procédé d'identification d'un document (100), **caractérisé en ce qu'**il comporte :
- une étape (405, 410, 415, 420, 425, 430) de capture d'une image d'une première marque sur une première face (105) du document,
- une étape (405, 410, 415, 420, 425, 430) de capture d'une image d'une deuxième marque imprimée invisible (155, 160) sur une deuxième face (150) du document, ladite deuxième marque étant superposée à une marque imprimée sur ladite première face, superposée signifiant que la deuxième marque possède les mêmes dimensions que la marque imprimée sur la première face et que le contour de la deuxième marque est superposé au contour de la marque imprimée sur la première face, les marques superposées ayant donc des formes symétriques par rapport à un axe du plan du document,
- une étape (435) de lecture du contenu d'une des première et deuxième marques, au moins l'une des marques dudit couple ayant un contenu unique,
- une étape (445) de mesure de la précision de superposition des marques invisibles superposées et
- une étape (450) d'identification du document en fonction dudit contenu.

10. Procédé selon la revendication 9, **caractérisé en ce qu'**au moins une des étapes (405, 410, 415, 420, 425, 430) de capture d'une image comporte une étape (420, 425) de dépôt de matière visible sur la marque dont une image est capturée.

11. Dispositif (505) de fabrication d'un document plan (100), **caractérisé en ce qu'**il comporte :
- un moyen (510, 511, 520, 525, 530) de génération d'une marque ayant un contenu unique,
- un moyen (515) d'impression, sur une première face du document, d'au moins une marque imprimée et
- un moyen (515) d'impression, sur une deuxième face du document opposée à ladite première face, d'au moins une marque imprimée invisible superposée à une marque imprimée sur ladite première face, superposée signifiant qu'elle possède les mêmes dimensions que la marque imprimée sur la première face et que son contour est superposé au contour de la marque imprimée sur la première face, les marques superposées ayant donc des formes symétriques par rapport à un axe du plan du document, la précision de superposition des marques invisibles superposées étant mesurable en fonction d'une valeur limite,
au moins un des moyens d'impression étant adapté, pour au moins couple de marques superposées formées sur lesdites faces opposées, à ce qu'au moins l'une des marques soit une marque générée ayant un contenu unique.

12. Dispositif (605) d'identification d'un document (100), **caractérisé en ce qu'**il comporte :
- un moyen (615) de capture d'une image d'une première marque sur une première face du document,
- un moyen (615) de capture d'une image d'une deuxième marque imprimée invisible (155, 160) sur une deuxième face (150) du document, ladite deuxième marque étant superposée à une marque imprimée sur ladite première face, superposée signifiant que la deuxième marque possède les mêmes dimensions que la marque imprimée sur la première face et que le contour de la deuxième marque est superposé au contour de la marque imprimée sur la première face, les marques superposées ayant donc des formes symétriques par rapport à un axe du plan du document,
- un moyen (610, 611, 620, 625, 630) de lecture du contenu d'une des premières et deuxièmes marques, au moins l'une des marques dudit couple ayant un contenu unique,
- un moyen de mesure de la précision de superposition des marques invisibles superposées et
- un moyen (610, 611, 620, 625, 630) d'identification du document en fonction dudit contenu.

## Patentansprüche

1. Plandokument (100), **dadurch gekennzeichnet, dass** es folgendes umfasst:
- auf einer ersten Seite (105) des Dokuments zumindest eine gedruckte Markierung (110, 115, 120, 125, 130),
- auf einer zweiten Seite (150) des Dokuments gegenüber der besagten ersten Seite zumindest eine unsichtbare gedruckte Markierung (155, 160), die auf einer gedruckten Markierung auf der besagten ersten Seite überlagert ist, wobei überlagert bedeutet, dass sie dieselben Abmessungen wie die gedruckte Markierung auf der ersten Seite besitzt, und dass ihre Kontur über die Kontur der gedruckten Markierung auf der ersten Seite überlagert ist, wobei die überlagerten Markierungen somit symmetrische Formen im Verhältnis zu einer Mitte der Dokumentenebene aufweisen, wobei die Überlagerungspräzision der überlagerten unsichtbaren Markierungen in Abhängigkeit von einem Grenzwert messbar ist,
- in zumindest einem Paar an überlagerten Markierungen (120-155, 125-160), die auf den besagten gegenüberliegenden Seiten gebildet werden, weist zumindest die eine der Markierungen des besagten Paares einen einzigartigen Inhalt auf.

2. Dokument nach Anspruch 1, **dadurch gekennzeichnet, dass** in zumindest einem Paar an überlagerten Markierungen (120-155, 125-160) jede gedruckte Markierung unsichtbar ist.

3. Dokument nach irgendeinem der Ansprüche 1 oder 2, **dadurch gekennzeichnet, dass** jede der Markierungen zumindest eines Paares an überlagerten Markierungen einen einzigartigen Inhalt aufweist.

4. Dokument nach irgendeinem der Ansprüche 1 bis 3, **dadurch gekennzeichnet, dass** zumindest eine besagte unsichtbare Markierung ein zweidimensionaler Strichcode ist.

5. Dokument nach irgendeinem der Ansprüche 1 bis 4, **dadurch gekennzeichnet, dass** zumindest eine besagte unsichtbare Markierung eine Kopierschutzmarkierung ist.

6. Dokument nach irgendeinem der Ansprüche 1 bis 5, **dadurch gekennzeichnet, dass** zumindest eine unsichtbare Markierung aus einem Strukturlack gebildet wird.

7. Dokument nach irgendeinem der Ansprüche 1 bis 6, **dadurch gekennzeichnet, dass** der Inhalt zumindest einer Markierung (110) repräsentativ für die Position einer unsichtbaren Markierung auf dem Dokument ist.

8. Verfahren zum Erzeugen eines Plandokuments, **dadurch gekennzeichnet, dass** es folgendes umfasst:
- einen Schritt (305, 310, 315) zum Erzeugen einer Markierung, die einen einzigartigen Inhalt aufweist,
- einen Schritt (330) zum Drucken zumindest einer gedruckten Markierung auf einer ersten Seite des Dokuments und
- einen Schritt (330) zum Drucken zumindest einer unsichtbaren gedruckten Markierung auf einer zweiten Seite des Dokuments gegenüber der besagten ersten Seite, die auf einer gedruckten Markierung auf der besagten ersten Seite überlagert ist, wobei überlagert bedeutet, dass sie dieselben Abmessungen wie die gedruckte Markierung auf der ersten Seite besitzt, und dass ihre Kontur über die Kontur der gedruckten Markierung auf der ersten Seite überlagert ist, wobei die überlagerten Markierungen somit symmetrische Formen im Verhältnis zu einer Mitte der Dokumentenebene aufweisen, wobei die Überlagerungspräzision der überlagerten unsichtbaren Markierungen in Abhängigkeit von einem Grenzwert messbar ist,
wobei in zumindest einem Druckschritt für zumindest ein Paar von überlagerten Markierungen, die auf den besagten gegenüberliegenden Seiten gebildet werden, zumindest die eine der Markierungen eine Markierung ist, die mit einem einzigartigen Inhalt erzeugt wird.

9. Verfahren zum Identifizieren eines Dokuments (100), **dadurch gekennzeichnet, dass** es folgendes umfasst:
- einen Schritt (405, 410, 415, 420, 425, 430) zum Erfassen eines Bildes einer ersten Markierung auf einer ersten Seite (105) des Dokuments,
- einen Schritt (405, 410, 415, 420, 425, 430) zum Erfassen eines Bildes einer zweiten unsichtbaren gedruckten Markierung (155, 160) auf einer zweiten Seite (150) des Dokuments, wobei die besagte zweite Markierung über einer gedruckten Markierung auf der besagten ersten Seite überlagert ist, wobei überlagert bedeutet, dass die zweite Markierung dieselben Abmessungen wie die gedruckte Markierung auf der ersten Seite besitzt, und dass die Kontur der zweiten Markierung über die Kontur der gedruckten Markierung auf der ersten Seite überlagert ist, wobei die überlagerten Markierungen somit symmetrische Formen im Verhältnis zu einer Mitte der Dokumentenebene aufweisen,
- einen Schritt (435) zum Lesen des Inhalts einer der ersten und zweiten Markierungen, wobei zumindest die eine der Markierungen des besagten Paares einen einzigartigen Inhalt aufweist,
- einen Schritt (445) zum Messen der Überlagerungspräzision der überlagerten unsichtbaren Markierungen und
- einen Schritt (450) zum Identifizieren des Dokuments in Abhängigkeit vom besagten Inhalt.

10. Verfahren nach Anspruch 9, **dadurch gekennzeichnet, dass** zumindest einer der Schritte (405, 410, 415, 420, 425, 430) zum Erfassen eines Bildes einen Schritt (420, 425) zum Ablegen von sichtbarer Materie auf der Markierung umfasst, von der ein Bild erfasst wird.

11. Vorrichtung (505) zum Erzeugen eines Plandokuments (100), **dadurch gekennzeichnet, dass** sie folgendes umfasst:
- ein Mittel (510, 511, 520, 525, 530) zum Erzeugen einer Markierung, die einen einzigartigen Inhalt aufweist,
- ein Mittel (515) zum Drucken zumindest einer gedruckten Markierung auf einer ersten Seite des Dokuments und
- ein Mittel (515) zum Drucken zumindest einer unsichtbaren gedruckten Markierung auf einer zweiten Seite des Dokuments gegenüber der besagten ersten Seite, die auf einer gedruckten Markierung auf der besagten ersten Seite überlagert ist, wobei überlagert bedeutet, dass sie dieselben Abmessungen wie die gedruckte Markierung auf der ersten Seite besitzt, und dass ihre Kontur über die Kontur der gedruckten Markierung auf der ersten Seite überlagert ist, wobei die überlagerten Markierungen somit symmetrische Formen im Verhältnis zu einer Mitte der Dokumentenebene aufweisen, wobei die Überlagerungspräzision der überlagerten unsichtbaren Markierungen in Abhängigkeit von einem Grenzwert messbar ist,
wobei sich zumindest eines der Druckmittel für zumindest ein Paar von überlagerten Markierungen, die auf den besagten gegenüberliegenden Seiten gebildet werden, dazu eignet, dass zumindest die eine der Markierungen eine Markierung ist, die mit einem einzigartigen Inhalt erzeugt wird.

12. Vorrichtung (605) zum Identifizieren eines Dokuments (100), **dadurch gekennzeichnet, dass** sie folgendes umfasst:
- ein Mittel (615) zum Erfassen eines Bildes einer ersten Markierung auf einer ersten Seite (105) des Dokuments,
- ein Mittel (615) zum Erfassen eines Bildes einer zweiten unsichtbaren gedruckten Markierung (155, 160) auf einer zweiten Seite (150) des Dokuments, wobei die besagte zweite Markierung über einer gedruckten Markierung auf der besagten ersten Seite überlagert ist, wobei überlagert bedeutet, dass die zweite Markierung dieselben Abmessungen wie die gedruckte Markierung auf der ersten Seite besitzt, und dass ihre Kontur über die Kontur der gedruckten Markierung auf der ersten Seite überlagert ist, wobei die überlagerten Markierungen somit symmetrische Formen im Verhältnis zu einer Mitte der Dokumentenebene aufweisen,
- ein Mittel (610, 611, 620, 625, 630) zum Lesen des Inhalts einer der ersten und zweiten Markierungen, wobei zumindest die eine der Markierungen des besagten Paares einen einzigartigen Inhalt aufweist,
- ein Mittel zum Messen der Überlagerungspräzision der überlagerten unsichtbaren Markierungen und
- ein Mittel (610, 611, 620, 625, 630) zum Identifizieren des Dokuments in Abhängigkeit vom besagten Inhalt.

## Claims

1. Planar document (100), **characterized in that** it comprises:
- on a first surface (105) of the document, at least one printed mark (110, 115, 120, 125, 130);
- on a second surface (150) of the document, opposite said first surface, at least one invisible printed mark (155, 160) vertically adjacent to a mark printed on said first surface, vertically adjacent meaning that it has the same dimensions as the mark printed on the first surface and that its outline is vertically adjacent to the outline of the mark printed on the first surface, the vertically adjacent marks therefore having symmetrical shapes with respect to an axis of the document's plane, the precision of the superimposition of the vertically adjacent invisible marks being measurable as a function of a limit value;
- in at least one pair of vertically adjacent marks (120-155, 125-160) formed on said opposite surfaces, at least one of the marks of said pair has unique content.

2. Document according to claim 1, **characterized in that**, in at least one pair of vertically adjacent marks (120-155, 125-160), each printed mark is invisible.

3. Document according to any one of claims 1 or 2, **characterized in that** each of the marks of at least one pair of vertically adjacent marks has unique content.

4. Document according to any one of claims 1 to 3, **characterized in that** at least one said invisible mark is a two-dimensional barcode.

5. Document according to any one of claims 1 to 4, **characterized in that** at least one said invisible mark is a copy-protection mark.

6. Document according to any one of claims 1 to 5, **characterized in that** at least one invisible mark is formed with a varnish.

7. Document according to any one of claims 1 to 6, **characterized in that** the content of at least one mark (110) is representative of the position of an invisible mark on the document.

8. Method for manufacturing a planar document, **characterized in that** it comprises:
- a step (305, 310, 315) of generating a mark having unique content;
- a step (330) of printing, on a first surface of the document, at least one printed mark; and
- a step (330) of printing, on a second surface of the document, opposite said first surface, at least one invisible printed mark vertically adjacent to a mark printed on said first surface, vertically adjacent meaning that it has the same dimensions as the mark printed on the first surface and that its outline is vertically adjacent to the outline of the mark printed on the first surface, the vertically adjacent marks therefore having symmetrical shapes with respect to an axis of the document's plane, the precision of the superimposition of the vertically adjacent invisible marks being measurable as a function of a limit value;
in at least one printing step, for at least the pair of vertically adjacent marks formed on said opposite surfaces, at least one of the marks is a generated mark having unique content.

9. Method for identifying a document (100), **characterized in that** it comprises:
- a step (405, 410, 415, 420, 425, 430) of capturing an image of a first mark on a first surface (105) of the document;
- a step (405, 410, 415, 420, 425, 430) of capturing an image of a second invisible printed mark (155, 160) on a second surface (150) of the document, said second mark being vertically adjacent to a mark printed on said first surface, vertically adjacent meaning that the second mark has the same dimensions as the mark printed on the first surface and that the outline of the second mark is vertically adjacent to the outline of the mark printed on the first surface, the vertically adjacent marks therefore having symmetrical shapes with respect to an axis of the document's plane;
- a step (435) of reading the content of one of the first and second marks, at least one of the marks of said pair having unique content;
- a step (445) of measuring the precision of the superimposition of the vertically adjacent invisible marks; and
- a step (450) of identifying the document according to said content.

10. Method according to claim 9, **characterized in that** at least one of the steps (405, 410, 415, 420, 425, 430) of capturing an image comprises a step (420, 425) of depositing visible material on the mark of which an image is captured.

11. Device (505) for manufacturing a planar document (100), **characterized in that** it comprises:
- a means (510, 511, 520, 525, 530) of generating a mark having unique content;
- a means (515) of printing, on a first surface of the document, at least one printed mark; and
- a means (515) of printing, on a second surface of the document, opposite said first surface, at least one invisible printed mark vertically adjacent to a mark printed on said first surface, vertically adjacent meaning that it has the same dimensions as the mark printed on the first surface and that its outline is vertically adjacent to the outline of the mark printed on the first surface, the vertically adjacent marks therefore having symmetrical shapes with respect to an axis of the document's plane, the precision of the superimposition of the vertically adjacent invisible marks being measurable as a function of a limit value;
at least one of the printing means, for at least the pair of vertically adjacent marks formed on said opposite surfaces, being designed so that at least one of the marks is a generated mark having unique content.

12. Device (605) for identifying a document (100), **characterized in that** it comprises:
- a means (615) of capturing an image of a first mark on a first surface of the document;
- a means (615) of capturing an image of a second invisible printed mark (155, 160) on a second surface (150) of the document, said second mark being vertically adjacent to a mark printed on said first surface, vertically adjacent meaning that the second mark has the same dimensions as the mark printed on the first surface and that the outline of the second mark is vertically adjacent to the outline of the mark printed on the first surface, the vertically adjacent marks therefore having symmetrical shapes with respect to an axis of the document's plane;
- a means (610, 611, 620, 625, 630) of reading the content of one of the first and second marks, at least one of the marks of said pair having unique content;
- a means of measuring the precision of the superimposition of the vertically adjacent invisible marks; and
- a means (610, 611, 620, 625, 630) of identifying the document according to said content.
